# EUROPEAN PATENT APPLICATION

(11) **EP 0 634 536 A1**
(43) Date of publication of application: **18.01.1995**
(21) Application number: 94202039.7
(22) Date of filing: 14.07.1994
(51) Int. Cl.: E04F 11/18, F16B 17/00

(54) **Method for connecting hollow vertical and horizontal profiles for the engineering and construction works and products formed by joined profiles**

(30) Priority: 15.07.1993 JP 197880/93
(71) Applicant: Keiichiro, Yamazaki, Tokyo-to (JP)
(72) Inventor: Keiichiro, Yamazaki, Tokyo-to (JP)
(74) Representative: Vollebregt, Cornelis Jacobus, Ir.

(57) **Abstract**

The present invention relates to a method for connecting the hollow vertical and horizontal profiles for civil engineering and construction, and to products formed by joining profiles.

Multiple slits are made into the direction of the axis or the circumference near an end of the hollow vertical profile and main holes that each accomodate a part of a vertical profile are formed in the horizontal profile at intervals of installation of the vertical profiles The end of a vertical profile is inserted into a main hole, the vertical profile is pressed into the direction of its axis and portions of the vertical profile between the slits, are bent outwardly. The portions bent outwardly extend to the outside of the vertical profile and into the inside of the horizontal profile, and thereby the hollow vertical profile and the horizontal profile are fixed.

## Description

The present invention is related to the method for connecting hollow vertical and horizontal profiles for the engineering and construction works and the products formed by joined profiles.

In the invention, the products formed by joined profiles for the engineering and construction works refers to a body constructed with profiles wherein at least one horizontal profile and at least one vertical profile is connected perpendicularly or inclinedly and it may be installed at the inside or outside of a building, the circumference of a site for a building, park, playground, factory, etc., or along a road, river, etc. So, it includes such railings as those of windows, stairs, balconies, bridges, etc., such lattices as those of windows, doors, partitions, etc., partitions or protections of a ranch, farm, flower-bed, lawn, road, river, pond, lake, swamp, etc., or outside fences of a building, hedges, barriers, etc..

Japanese patent publication No. sho55-46,250 describes a method for connecting a horizontal profile and vertical profile wherein a flange is mounted on the outside circumference of a edge of the hollow vertical profile and the edge of the vertical profile which is inserted into the main hole of a plate of the horizontal profile is expanded and opened outwardly by pressing, whereby the plate around the former main hole's circumference is constricted between the edge, bent outwardly, of the vertical profile and the former flange, whereby the vertical profile is fixed to the horizontal profile.

However, the pressing of said method requires to prepare a mold that fits the shape of a cut side of the vertical profile and to insert the mold into the horizontal profile, and thus, manufacturing efficiency by said method is low and cost thereof increases.

In addition, the method for sticking the vertical and horizontal profiles using rivets has also been used. However, in this method, the raw materials of a rivet and those of the profiles are sometimes different. When re-using the metals of the products formed by joined profiles for civil engineering and construction, by melting, it is necessary to sort different kinds of metals, resulting in bad work efficiency and increased cost.

Thus, an object of the present invention is to provide a method for connecting hollow vertical and horizontal profiles of products formed by joined profiles for the engineering and construction works and the products so obtained, without using any mold that fits the shape of a cut side of the vertical profile, thereby saving cost and improving manufacturing efficiency.

In addition, the invention is also trying to provide a method for connecting hollow vertical and horizontal profiles, without using any different kinds of metals such as a rivet when joining the vertical and horizontal profiles, resulting in the products formed by profiles for civil engineering and construction that could be recycled easily.

Figure 1 is a front view of an embodiment of a product formed by joined profiles for civil engineering and construction according to the present invention.

Figure 2 is a sectional view of the line A-A part of Figure 1, before pressurization.

Figure 3 is a sectional view of the line A-A part of Figure 1, after pressurization.

Figure 4 is a partial sectional view of another embodiment of a connecting part of the product formed by joined profiles for civil engineering and construction before processing.

Figure 5 is a partial sectional view of the connecting part of Figure 4 after processing.

Figure 6 is a front view of another embodiment of a product formed by joined profiles for civil engineering and construction according to the present invention.

Figure 7 is a vertical sectional view of the principal part of the connecting part of Figure 6 before processing.

Figure 8 is a vertical sectional view of the principal part of the connecting part of Figure 6 after processing.

Figure 9 is a vertical sectional view of the principal part of a connecting part, before pressurization, of another embodiment of the latticelike product for civil engineering and construction according to the present invention.

Figure 10 is a vertical sectional view of the principal part of the connecting part of Figure 9, after pressurization.

Figure 11 is a perspective view of an edge of a vertical profile.

Figure 12 is a perspective view of an edge of a vertical profile.

Figure 13 is a perspective view of an edge of a vertical profile.

Figure 14 is a perspective view of an edge of a vertical profile.

Figure 15 is a perspective view of a horizontal profile.

Figure 16 is a perspective view of a horizontal profile.

Figure 17 is a perspective view of a horizontal profile.

### [Explanation of the signs]

1: Product formed by joined profiles,
2: Hollow vertical profile,
4: Slit, 5: Portion bent outwardly, 7: Horizontal profile,
8: Main hole, 12: Product formed by joined profiles,
13: Vertical profile, 14: Horizontal profile, 16: Main hole,
17: Slit

Hereinafter, the present invention's method for connecting hollow vertical and horizontal profiles and products formed by joined profiles are explained using the reference signs of the attached drawings. Multiple slits 4 are provided at an end 3 of a hollow vertical profile 2 into the direction of the circumference. Main holes 8 that fit the shape of an end of the vertical profile 2 are provided on a horizontal profile 7 at intervals of installation of the vertical profiles 2. The end 3 of the vertical profile 2 is inserted into the main hole 8, the vertical profile 2 is pressed into the direction of its axis and portions of the vertical profile, between the slits 4, 4, is bent outwardly, and the portions 5 bent outwardly are extending to the outside of the vertical profile 2 and to the inside of the horizontal profile 7. Thereby the hollow vertical profile 2 and the horizontal profile 7 are fixed to each other.

In another way, multiple slits 4 are provided in an end 3 of a hollow vertical profile 2 into the direction of the axis and main holes 8 that fit the end of the vertical profile 2 are provided in a horizontal profile 7 at intervals of installation of the vertical profiles 2. The end 3 of the vertical profile 2 is inserted into the main hole 8, the vertical profile 2 is pressed into the direction of its axis and portions of the vertical profile between the slits 4, 4 are bent outwardly, and said portions 5 bent outwardly are extending to the outside of the vertical profile 2 and to the inside of the horizontal profile 7. Thus, the hollow vertical profile 2 and the horizontal profile 7 are fixed.

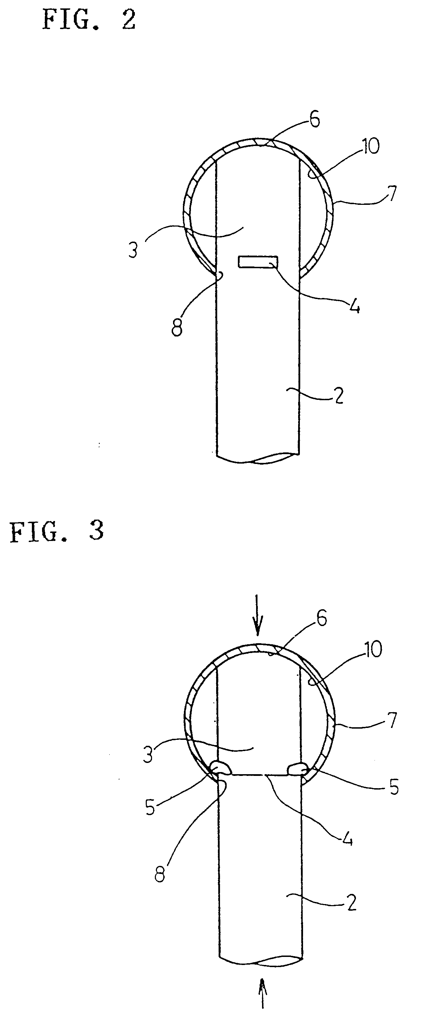

Multiple slits 4 of discretionary shape are provided in both ends 3 of a hollow vertical profile 2 into the direction of the circumference. As shown in Figure 2, both ends 3 of the hollow vertical profile 2 are inserted into main holes 8 provided in horizontal profiles 7.

As each end of the vertical profile 2 is contacted to the inside of the horizontal profile 7, as shown in Figure 3, if the vertical profile 2 is pressed into the direction of its axis, portions of the vertical profile between the slits 4, 4 will be bent outwardly, because the portions 5 are weak against the force into the direction of the axis at profile 2, compared with the portions of the profile in which no slits are shaped. The portions 5 bent outwardly will project to the outside of the vertical profile 2 and to the inside of the horizontal profile 7 and thereby the hollow vertical profile 2 and the horizontal profile 7 will be fixed.

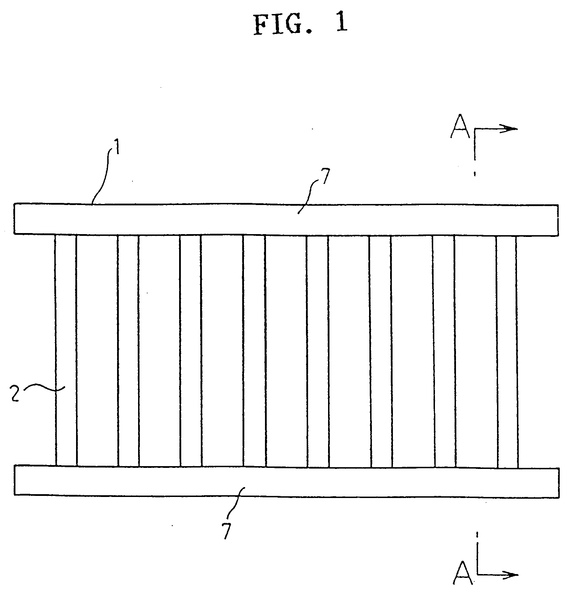

The embodiment shown in Figure 1 through Figure 3 is a product formed by joined profiles for civil engineering and construction in which the hollow vertical profile 2 and the horizontal profile 7 are connected at the right angle.

In said embodiment, the long slits 4 are horizontally arranged at four places into the direction of the circumference at both ends 3 of the cylindrical vertical profile 2.

These both ends 3 of the vertical profile 2 are inserted into main holes 8 made at the same interval on the cylindrical horizontal profile 7 and the both edges 6 of the vertical profiles 2 are pressed to the inside 10 of the horizontal profiles 7. Portions between the slits 4 are bent outwardly when the vertical profile 2 is pressed into the direction of its axis and the portions 5 bent outwardly are extending to the inside of the horizontal profile 7. Thereby the hollow vertical profile can not be separated from the horizontal profile 7 and the both blocks are fixed.

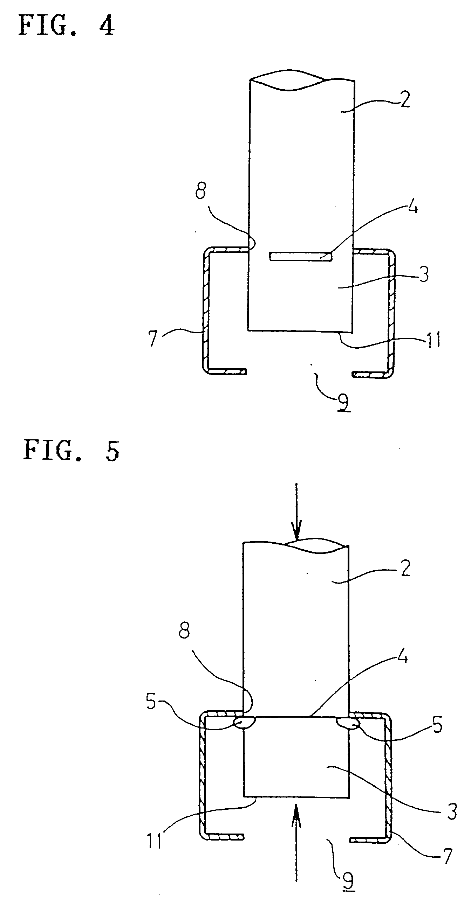

Figures 4 and 5 show an embodiment in which the outer side 9 of a horizontal profile 7 is an open side. In this case, when a vertical profile 2 is inserted into a main hole 8 made in the horizontal profile 7 and the end 11 of the vertical profile 2 is pressed directly into the direction of its axis, portions of the vertical profile 2 between the slits will be bent outwardly. The portions 5 bent outwardly will be expanded and opened to the inside of the horizontal profile 7, and thereby the hollow vertical profile 2 and the horizontal profile 7 will be fixed.

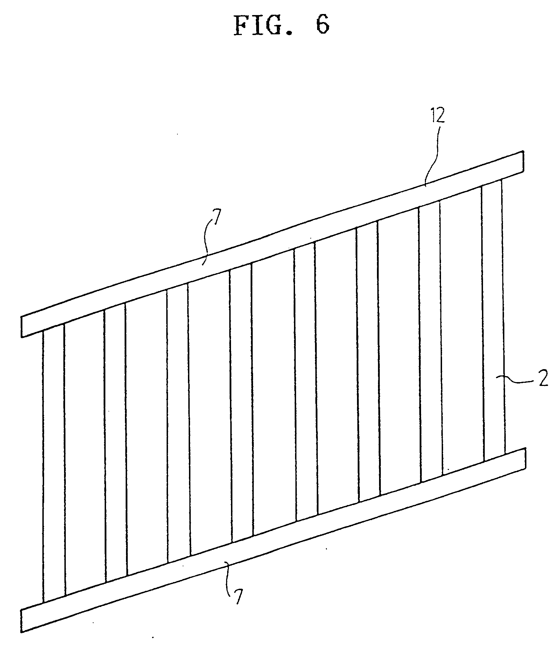

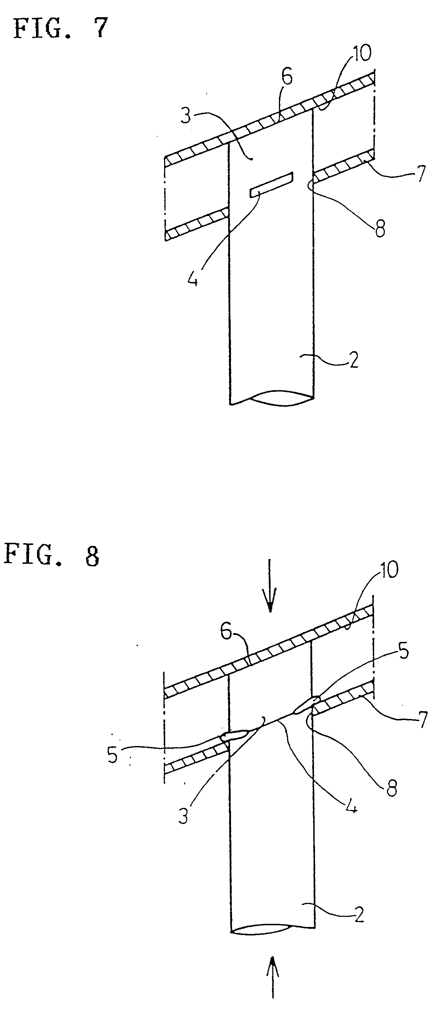

In the embodiment in Figure 6 through Figure 8, the products formed by joined profiles for civil engineering and construction that are used for stair railing, etc. are shown, in which case a vertical profile 2 and a horizontal profile 7 are connected inclinedly. In the examples, the long slits 4 are crosswise installed at four places into the direction of the cirumference of both ends 3 of the cylindrical vertical profile 2.

The both ends 3 of the vertical profile 2 are inserted inclinedly into main holes 8 installed at the same intervals on the cylindrical horizontal profiles 7, the both ends 6 of the vertical profile 2 are contacted to the inside 10 of the horizontal profile 7, and the vertical profile 2 is pressed into the direction of the axis. Then, portions of the vertical profile 2 between the slits are bent outwardly, the portions 5 bent outwardly be expanded and opened to the inside of the horizontal profile 7, and thus the hollow vertical profile 2 and the horizontal profile 7 are fixed.

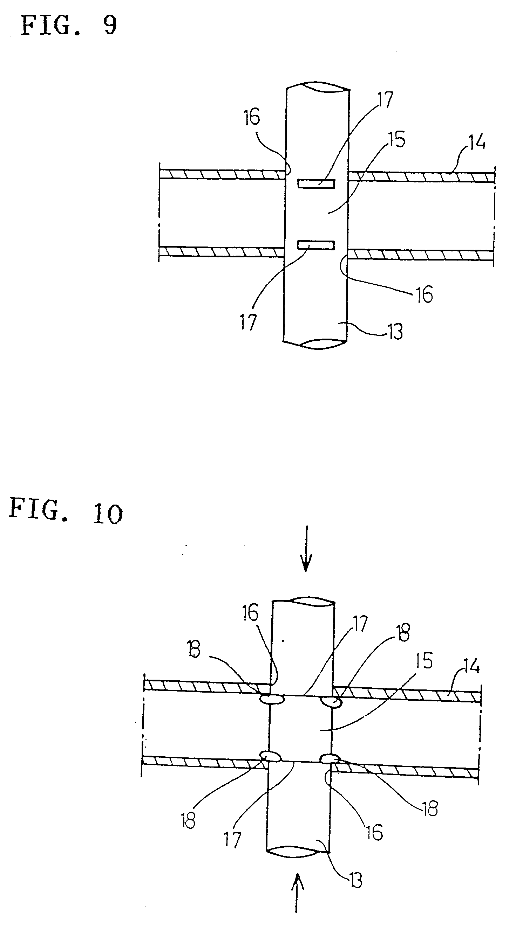

The embodiment shown in Figure 9 and Figure 10 relates to the latticelike products formed by joined profiles for civil engineering and construction in which a vertical profile 13 and a horizontal profile 14 cross each other perpendicularly. In said embodiment, a main hole 16 penetrates the cylindrical horizontal profile 14 and the cylindrical vertical profile 13 is inserted through the hole 16. In the area in which the vertical profile 13 extends through the horizontal profile 14, slits 17 are made in the profile 13 into the direction of the circumference at both opposite internal sides of the profile 14 near the main hole 16. When a compressive force is exerted into the direction of the axis of the profile 13, portions of the vertical profile 13 between the slits are bent outwardly, the portions 18 bent outwardly extend into the inside of the horizontal profile 14, and thus the hollow vertical profile 13 and the horizontal profile 14 are fixed.

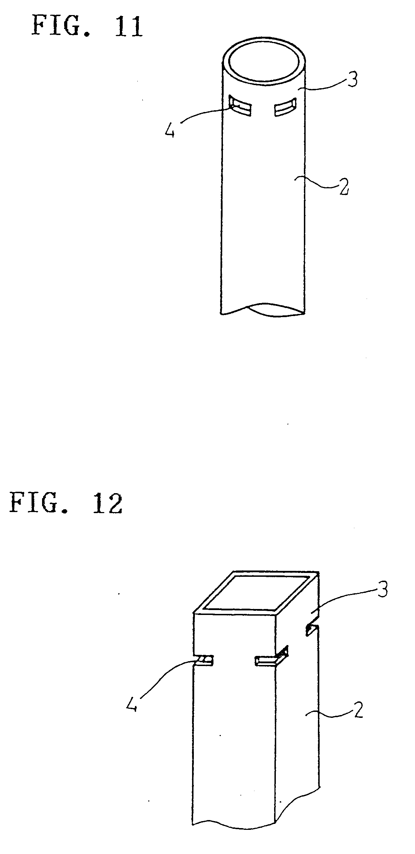

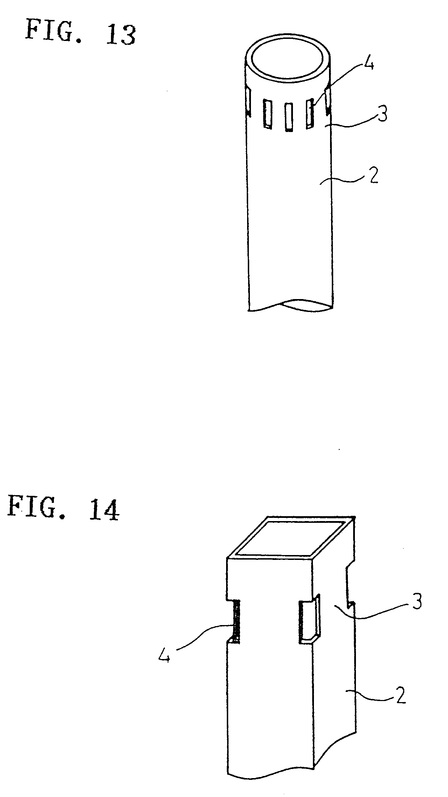

As shown in Figure 11 through Figure 14, the hollow vertical profiles 2 can take any shape such as a cylinder or a tube and the slits 4 made in the end 3 can also take any shape and direction in terms of length, width, oval-type, etc..

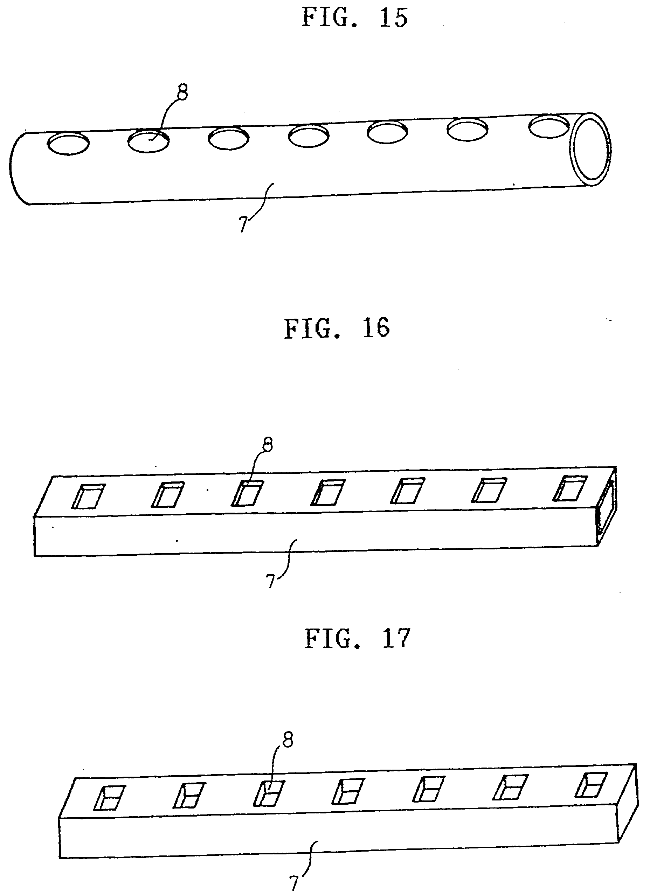

In addition, as shown in Figure 15 through Figure 17, a horizontal profile 8 can take any shape such as a cylinder, a tube, a cut section, etc., and the inside empty material as well as the inside-full material can be used as shown in Figure 17.

As shown above, in the present invention's method for connecting the hollow vertical 2 and horizontal 7 profiles of the products for civil engineering and construction, multiple slits 4 are made into the direction of the axis or the circumference of the end 3 of the hollow vertical block 2, the main hole 8 that fits the end of the vertical profile 2 is formed in the horizontal profile 7 at intervals of installation of the vertical profile 2, the end 3 of the vertical profile 2 is inserted into the main hole 8, the vertical profile 2 is pressed into the direction of its axis whereby the portions of the vertical profile 2 between the slits are bent outwardly. The portions 5 bent outwardly extend to the outside of the vertical profile 2 and into the inside of the horizontal profile 7, and thereby the vertical profile 2 and the horizontal profile 7 are fixed. Therefore, according to the present invention, it is required only to form the main hole 8 in the horizontal profile 7 and to form the slits 4 of the vertical profile 2, and it is possible to connect the hollow vertical block 2 and the horizontal block 7 without using any mold that fits the cut shape of the vertical profile 2, resulting in cost savings and improvement in manufacturing efficiency.

In addition, to connect the hollow vertical block 2 and the horizontal block 7, there is no use of parts of different kinds of metals such as rivets. Thus, when re-using metals of the products formed by joining profiles for civil engineering and construction by melting, it is not necessary to sort out different kinds of metals, and therefore recycling is easy, and cost also decreases.

## Claims

1. A method for connecting a hollow vertical profile and a horizontal profile for the engineering and construction works wherein the hollow vertical and horizontal profiles are fixed, characterized in the multiple slits (4) are made in an end (3) of the hollow vertical block (2) into the direction of the circumference, main holes (8) that fit the end of the vertical profile (2) are made in the horizontal profile (7) at intervals of installation of the vertical profile (2), the end (3) of the vertical profile (2) is inserted into the hole (8), the vertical profile (2) is pressed into the direction of its axis to bend outwardly portions of the vertical profile (2) between the slits (4), (4), whereby the portions (5) bent outwardly extend to the outside of the vertical profile (2) and into the inside of the horizontal profile (7).

2. A method for connecting a hollow vertical profile and a horizontal profile for the engineering and construction works wherein the hollow vertical and horizontal profiles are fixed, characterized in that multiple slits (4) are made in an end (3) of the hollow vertical block (2) into the direction of the axis, main holes (8) that fit the end of the vertical profile (2) are installed on the horizontal profile (7) at intervals of installation of the vertical profiles (2), the end (3) of the vertical profile (2) is inserted into the hole (8), the vertical profile (2) is pressed into the direction of its axis to bend outwardly portions of the vertical profile (2) between the slits (4), (4), whereby the portions (5) bent outwardly extend to the outside of the vertical profile (2) and into the inside of the horizontal profile (7).

3. An articile of construction comprising:
a main profile having at least one hole; and
at least one insertion profile provided with a plurality of slits near an end thereof whereby said insertion profile is inserted into the main hole of said main profile and portions of said vertical profile, between said slits, are bent outwardly thereby fixing said insertion profile within said main hole of said main profile.

4. The article of construction as in claim 3, wherein said main profile is generally cylindrical shaped.

5. The article of construction as in claim 3 or 4, wherein said insertion profile is generally cylindrical shaped.

6. The article of construction as in claim 3 and 5 as far as depending on claim 3, wherein said main profile is rectangular in cross section.

7. The article of construction as in claim 3, 4 and 6 as far as depending on claim 3 and 4, wherein said insertion profile is rectangular in cross section.

8. The article of construction as in claim 7, wherein said slits are formed in each corner of said insertion profile.

9. The article of construction as in any preceding claims 3 - 8, wherein said main profile includes a plurality of holes and a plurality of insertion profiles are inserted into said plurality of holes.

10. The article of construction as in claim 9, wherein said main profile is inclined with respect to said insertion profile to form a stair railing.

11. The article of construction as in any one of claims 3 - 10, wherein said hole passes completely through said main profile and said insertion profile is provided with two sets of axially spaced slits, wherein portions of said insertion profile between said slits of each set of slits are bent outward to fixedly attach said insertion profile within said hole of said main profile.

12. The article of construction as in any one of claims 3 - 11, wherein said at least one insertion profile has two ends and said slits are disposed between and nonadjecent to the ends of the insertion profile.
